# EUROPÄISCHE PATENTSCHRIFT

(11) **EP 2 572 815 B1**
(45) Veröffentlichungstag und Bekanntmachung des Hinweises auf die Patenterteilung: **18.03.2015**
(21) Anmeldenummer: 11182335.7
(22) Anmeldetag: 22.09.2011
(51) Int. Cl.: B22F 3/105, H05B 6/02

(54) **Multifrequente Induktionserwärmung von generativ hergestellten Bauteilen**
Multi-frequency induction heating of generated components
Chauffage à induction multifréquent de composants fabriqués de manière générative

(43) Veröffentlichungstag der Anmeldung: 27.03.2013
(73) Patentinhaber: MTU Aero Engines AG, 80995 München (DE)
(72) Erfinder: Dr. Dusel, Karl-Heinz, 85716 Unterschleißheim (DE); Heß, Thomas, 81541 München (DE); Dr. Bamberg, Joachim, 85221 Dachau (DE); Satzger, Wilhelm, 80804 München (DE); Dr. Jakimov, Andreas, 81245 München (DE); Schneiderbanger, Stefan, 85232 Bergkirchen (DE); Dr. Bayer, Erwin, 85221 Dachau (DE); Dr. Kopperger, Bertram, 85221 Dachau (DE); Hanrieder, Herbert, 85411 Hohenkammer (DE)

(56) Entgegenhaltungen:
- EP-A1- 2 359 964
- WO-A1-2008/071165
- DE-A1-102004 022 385
- DE-A1-102009 051 479
- DE-U1-202009 012 628
- US-A- 5 088 047
- US-A- 5 805 971
- US-A1- 2002 158 054

## Beschreibung

### HINTERGRUND DER ERFINDUNG

### GEBIET DER ERFINDUNG

Die vorliegende Erfindung betrifft ein Verfahren zur Herstellung von Bauteilen durch ein generatives Herstellungsverfahren, insbesondere ein Verfahren mittels selektiven Bestrahlens eines Pulverbetts.

### STAND DER TECHNIK

Aus dem Stand der Technik sind generative Herstellungsverfahren zur schnellen Herstellung von Prototypen oder zur Herstellung von Bauteilen, die mit anderen Verfahren schwierig herzustellen sind, bekannt. Unter anderem werden hierfür Verfahren wie das selektive Laserschmelzen (SLM Selective Laser Melting) oder das direkte Metalllasersintern (DMLS Direct Metal Laser Sintering) eingesetzt. Aus dem Stand der Technik sind insbesondere auch generative Herstellverfahren für die Herstellung von Bauteilen einer Strömungsmaschine, wie beispielsweise von Bauteilen eines Flugtriebwerks oder einer Gasturbine bekannt, z.B. das in der DE 10 2009 051 479 A1 beschriebene Verfahren bzw. eine entsprechende Vorrichtung zur Herstellung eines Bauteils einer Strömungsmaschine.

Bei diesem Verfahren wird durch schichtweisen Auftrag von mindestens einem pulverförmigen Bauteilwerkstoff auf einer Bauteilplattform im Bereich einer Aufbau- und Fügezone sowie schichtweises und lokales Schmelzen oder Sintern des Bauteilwerkstoffs mittels im Bereich der Aufbau- und Fügezone zugeführter Energie ein entsprechendes Bauteil hergestellt. Die Zufuhr der Energie erfolgt hierbei über Laserstrahlen, wie beispielsweise CO₂-Laser Nd:YAG-Laser, Yb-Faserlaser sowie Diodenlaser, oder durch Elektronenstrahlen. Bei dem in der DE 10 2009 051 479 A1 beschriebenen Verfahren wird weiterhin das erzeugte Bauteil bzw. die Aufbau- und Fügezone auf eine Temperatur knapp unterhalb des Schmelzpunkts des Bauteilwerkstoffs mittels eines Zonenofens erwärmt, um eine gerichtet erstarrte oder einkristalline Kristallstruktur aufrechtzuerhalten.

Aus der DE 10 2004 022 385 A1 ist ebenfalls eine Vorrichtung und ein Verfahren zur schnellen Herstellung von Mikrokörpern bekannt, bei welchen zusätzlich zum selektiven Schmelzen oder Sintern von Partikeln mittels Laserstrahlen ein Magnetfeld im Bereich der Aufbau- und Fügezone zur Verdichtung der Partikel der aufgetragenen Schichten vorgesehen wird. Zudem ist eine Strahlungsheizung, die auf die Oberfläche der Partikel wirkt, zum Beispiel in Form einer leistungsstarken Halogenbeleuchtung und eine Heizung des Bauteilträgers vorgesehen.

Die EP 2 359 964 A1 offenbart ein Verfahren zum Herstellen eines 3-dimensionalen Bauteils mittels selektiven Laserschmelzens, wobei zur Erwärmung eine Induktionsspule Verwendung findet, die um das Bauteil seitlich angeordnet und angepasst ist.

Die WO 2008/071165 A1 beschreibt wiederum eine Vorrichtung und ein Verfahren zur Reparatur von Turbinenschaufeln von Gasturbinen mittels Pulverauftragsschweißen, wobei für die Auftragsschweißung eine Strahlungsquelle, wie ein Laser oder ein Elektronenstrahl, Verwendung findet. Zugleich wird über eine Induktionsspule eine Heizvorrichtung zur Beheizung der zu reparierenden Schaufel bereitgestellt.

Die US 2002/0158054 A1 offenbart ein Verfahren zum selektiven Lasersintern, wobei die Erwärmung des Pulverbetts bzw. des herzustellenden Bauteils über seitlich angebrachte Heizringe erfolgt.

Obwohl aus dem Stand der Technik somit bekannt ist, bei einem generativen Herstellverfahren, bei welchem Pulverpartikel mittels Bestrahlung zur Bildung eines Bauteils geschmolzen oder gesintert werden, zusätzlich eine Beheizung des Bauteils vorzusehen und diese zusätzliche Beheizung mittels induktiver Erwärmung zu reali-Das generative Herstellungsverfahren kann durch das direkte Metalllasersintern oder das selektive Laserschmelzen realisiert sein. Ganz allgemein können jegliche energiereiche Strahlen, wie Laserstrahlen oder Elektronenstrahlen, zum selektiven Schmelzen und/oder Sintern von Pulverpartikeln in einem Pulverbett eingesetzt werden, um ein entsprechendes Bauteil herzustellen. Wesentlich ist lediglich, dass das hergestellte Bauteil zugleich induktiv erwärmt wird, wobei mindestens zwei Induktionswechselspannungen mit unterschiedlichen Frequenzen eingesetzt werden, um gezielt bestimmte Wirkungsbereiche einstellen zu können, um so eine ausreichende Erwärmung des hergestellten Bauteils, insbesondere in der Ebene, in der die nächste Schicht aufgebaut wird, zu erzielen, so dass Risse verursachende Temperaturgradienten oder Spannungen durch ungleichmäßige Abkühlungen vermieden werden können.

Für die Induktionserwärmung kann eine Induktionseinrichtung vorgesehen sein, die mehrere Spulen aufweist, wobei an jeder der Spulen zwei oder mehr Induktionswechselspannungen mit unterschiedlichen Frequenzen überlagert werden können.

Es werden erfindungsgemäß mehrere Spulen bereitgestellt, wobei die Spulen sowohl jeweils einzeln mit einzelnen Wechselspannungen beaufschlagt werden können, die wiederum unterschiedlich zueinander sind, als auch mehrere Spulen mit jeweils mehreren Wechselspannungen mit unterschiedlichen Frequenzen betrieben werden können. Insbesondere ist eine beliebige Kombination von einzelnen Spulen mit mehreren überlagerten Induktionswechselspannungen unterschiedlicher Frequenzen mit Spulen, bei denen jeweils nur eine Wechselspannung angelegt ist, möglich.

Darüber hinaus kann bei dem Verfahren und/oder bei der Vorrichtung die Anordnung einer einzelnen oder von mehreren Spulen so gewählt werden, dass keine Beeinträchtigung des generativen Herstellungsprozesses, also keine Beeinträchtigung der gestalterischen Freiheit bei der Herstellung des Bauteils gegeben ist.

sieren, bestehen weiterhin Probleme derartige generative Herstellungsverfahren für Hochtemperaturlegierungen einzusetzen, die nicht schmelz- bzw. schweißbar sind, da es bei derartigen Legierungen häufig zu inakzeptablen Heißrissen kommt.

### OFFENBARUNG DER ERFINDUNG

### AUFGABE DER ERFINDUNG

Es ist deshalb Aufgabe der vorliegenden Erfindung ein Verfahren zur generativen Herstellung von Bauteilen aus Werkstoffen bereitzustellen, die zu Heißrissen neigen, wobei gleichzeitig die geometrischen Gestaltungsfreiheiten des generativen Herstellungsprozesses möglichst wenig eingeschränkt werden sollen. Zudem soll das Verfahren einfach durchführbar und leicht betreibbar sein.

### TECHNISCHE LÖSUNG

Die oben bezeichnete Aufgabenstellung wird durch ein Verfahren mit den Merkmalen des Anspruchs 1 gelöst. Vorteilhafte Ausgestaltungen sind Gegenstand der abhängigen Ansprüche.

Der vorliegenden Erfindung liegt die Idee zu Grunde, dass durch die Verwendung von mindestens zwei Wechselspannungen, die unterschiedliche Frequenzen aufweisen, eine gezielte induktive Erwärmung von Bereichen des hergestellten Bauteils möglich ist, sodass ausreichend hohe Temperaturen in den entsprechenden Bauteilbereichen erzielbar sind und gleichzeitig vermieden wird, dass der generative Herstellungsprozess durch die induktive Erwärmung eingeschränkt wird. Unter Wechselspannung wird hierbei jede Form einer geeigneten Induktianswechselspannung, wie eine Rechteckspannung, Zick-Zack-Spannung, eine asymmetrische Wechselspannung oder dergleichen verstanden.

Mindestens eine Spule der Induktionseinrichtung kann oberhalb und/oder um das Pulverbett angeordnet werden, da durch die gezielte Auswahl der entsprechenden Anregungsfrequenzen eine gezielte Lokalisierung der Wirkungsbereiche möglich ist und somit ein unerwünschtes Aufschmelzen oder Sintern der Pulverpartikel im Pulverbett vermieden werden kann. Erfindungsgemäß ist mindestens eine der Spulen zur induktiven Erwärmung so angeordnet ist, dass sie zumindest teilweise oberhalb einer Ebene angeordnet ist, in welcher durch die Strahlung das Bauteil im Pulverbett erzeugt wird. Insbesondere können die mehrere Spulen derart teilweise oberhalb und ggf. auch um das Pulverbett angeordnet sein, so dass entsprechende Windungen der Spulen sowohl oberhalb als auch unterhalb einer Bauebene, in der die nächste Schicht auf das herzustellende Bauteil aufgetragen wird, angeordnet sind.

Die Spulen können auch entlang der Spulenachse, also der axialen Achse um welche die Windungen herum verlaufen, angeordnet werden, oder die Spulen können ineinander angeordnet sein, so dass also Windungen der einen Spule innerhalb der Windungen einer anderen Spule angeordnet sind, und zwar sowohl axial als auch radial.

Die Spulen sind erfindungsgemäß immer zumindest teilweise so oberhalb des Pulverbetts angeordnet, dass die entsprechende energiereiche Strahlung zumindest teilweise durch die Spule hindurch auf das Pulverbett gerichtet wird.

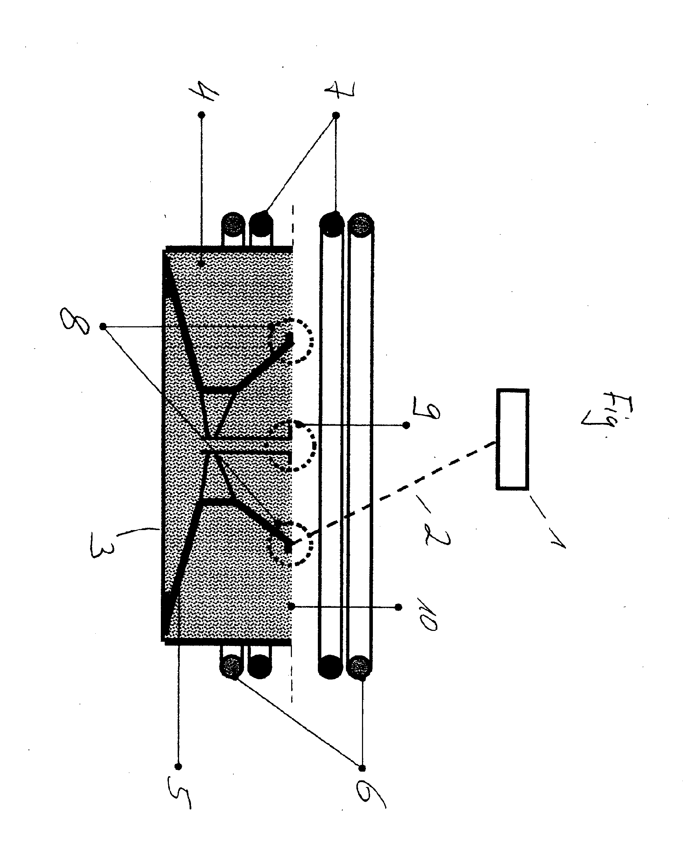

### KURZBESCHREIBUNG DER FIGUR

Die beigefügte Figur zeigt in rein schematischer Weise in einer seitlichen Schnittansicht eine Vorrichtung zur Herstellung von Bauteilen mittels eines generativen Herstellungsverfahrens.

### AUSFÜHRUNGSBEISPIEL

Die vorliegende Erfindung wird anhand des nachfolgend näher beschriebenen Ausführungsbeispiels detailliert erläutert, wobei für den Fachmann klar ist, dass die Erfindung nicht auf dieses Ausführungsbeispiel beschränkt ist.

Die Figur zeigt einen Laser 1, mit dem ein Laserstrahl 2 erzeugt werden kann, der über eine Fläche verfahrbar ist. Statt eines Laserstrahls 2 können auch andere Strahlungsarten, wie beispielsweise Elektronenstrahlen oder andere energiereiche Strahlen verwendet werden.

Der Laserstrahl 2 ist insbesondere über eine Fläche bewegbar, die durch die Bauebene 10 und den Pulverbehälter 3 definiert ist. Der Pulverbehälter 3 beinhaltet ein Pulverbett 4 aus einer Vielzahl von Pulverteilchen aus einem oder mehreren Werkstoffen, aus denen das zu erzeugende Bauteil 5 hergestellt werden soll. Beim Auftreffen des Laserstrahls 2 auf das Pulver in der Bauebene 10 werden die Pulverteilchen aufgeschmolzen oder so stark erwärmt, dass sie durch Sintern mit benachbarten Pulverteilchen und dem bereits erzeugten Bauteil 5 verbunden werden. Auf diese Weise kann Schicht für Schicht das Bauteil 5 aus dem Pulver des Pulverbetts 4 hergestellt werden. Zu diesem Zweck ist es lediglich erforderlich über dem bereits erzeugtem Bauteil 5 neue Pulverschichten anzuordnen und diese schichtweise zu einem Festkörper zu verschmelzen oder zu sintern. Dafür kann das Bauteil 5 schrittweise mit dem Boden des Pulverbehälters 3 abgesenkt werden, sodass eine neue Pulverschicht an der Oberseite des Pulverbetts aufgebracht werden kann.

Um zu vermeiden, dass das bereits hergestellte Bauteil 5 durch zu starke Temperaturdifferenzen beispielsweise durch Spannungsrisse oder Heißrisse geschädigt wird, wird das Bauteil 5 insbesondere in den durch gestrichelte Linien eingekreisten Wirkungsbereichen 8, 9 induktiv erwärmt. Hierzu sind zwei Spulen 6, 7 vorgesehen, die im Schnitt als Teilringe dargestellt sind. Die Spulen 6, 7 sind mit Hochfrequenzgeneratoren verbunden, die hochfrequente Wechselspannungen mit Frequenzen im Bereich von einigen Kilohertz bis zu einigen Megahertz erzeugen können. Durch die an den Spulen angelegte Wechselspannung bzw. die dadurch erzeugten Wechselströme werden in dem Bauteil 5 Wirbelströme induziert, die zu einer Erwärmung des Bauteils führen.

Durch die geeignete Anordnung der Spulen 6, 7, insbesondere oberhalb und/oder unterhalb der Bauebene 10 sowie die Wahl geeigneter Frequenzen für die angelegte Wechselspannung können die Wirkungsbereiche 8 und 9 gezielt eingestellt werden, sodass eine wirksame Erwärmung des Bauteils 5 in den kritischen Bauteilbereichen eingestellt werden kann, ohne dass es zu unerwünschten Aufschmelzungen oder Sinterereignissen im Pulverbett 4 kommt. Insbesondere durch die Verwendung mehrerer verschiedener Frequenzen für die Induktionsspannungen in den Spulen 6, 7 kann eine gezielte lokale Erwärmung des Bauteils 5 erreicht werden, ohne dass in anderen Bereichen, in denen eine Erwärmung nicht gewünscht ist, eine zu starke Erwärmung auftritt. Dies ermöglicht auch die Anordnung der Spulen 6, 7 um den Pulverbehälter 3 bzw. um das Pulverbett 4 herum, ohne dass die Gefahr besteht, dass der ganze Bauraum zu stark aufgeheizt wird und das darin befindliche Pulver sintert oder aufschmilzt. Gleichzeitig wird gewährleistet, dass die Gestaltungsfreiheit im Pulverbehälter 3 nicht durch eine entsprechende Anordnung der Spulen 6, 7 beeinträchtigt wird. Insbesondere können die Wirkungsbereiche 8, 9 im Bereich der Bauebene 10 erzeugt werden, sodass Temperaturgradienten auf den Bauteiloberflächen innerhalb der Bauebene 10 vermieden oder reduziert werden.

Statt den gezeigten Spulen 6 und 7, die jeweils mit unterschiedlichen Frequenzen der Induktionswechselspannung betrieben werden, können auch mehrere Spulen vorgesehen werden, wobei bei jeder Spule ebenfalls eine Überlagerung von Wechselspannungen mit unterschiedlichen Frequenzen eingestellt werden kann, und bei mehreren Spulen eine Kombination von Spulen mit unterschiedlichen Induktionswechselspannungen und/oder die Überlagerung von Induktionswechselspannungen auf einzelnen oder allen Spulen möglich ist. Entsprechend der erforderlichen Wirkungsbereiche 8, 9, welche auch von der Geometrie des herzustellenden Bauteils 5 abhängen, können eine unterschiedliche Anzahl von Spulen mit unterschiedlichen Frequenzen von Induktionswechselspannungen eingesetzt werden und die Anordnung der Spulen ausgewählt werden.

Bei dem gezeigten Ausführungsbeispiel ist die Spule 6 so angeordnet, dass ihre Windungen oberhalb und unterhalb der Spule 7 angeordnet sind, sodass die Spulen 6 und 7 ineinander gestellt sind. Allerdings ist es auch denkbar, dass die Spulen bei Verwendung mehrerer Spulen hintereinander angeordnet werden, also beispielsweise entlang der Spulenachse, die senkrecht zur Bauebene 10 steht. Auch andere Anordnungen der Spule sind denkbar.

## Patentansprüche

1. Verfahren zur Herstellung von Bauteilen (5) mittels selektivem Bestrahlen eines Pulverbetts (4), bei welchem das hergestellte Bauteil (5) zugleich induktiv erwärmt wird,
**dadurch gekennzeichnet, dass**
- die Induktionsanregung über mehrere Spulen (6, 7) bereit gestellt wird, bei denen mehrere Wechselspannungen mit unterschiedlichen Frequenzen angelegt werden,
- die Anordnung der Spulen (6, 7) zur induktiven Erwärmung und/oder die Auswahl der Frequenzen der Wechselspannungen so erfolgt, dass die Wirkungsbereiche (8, 9) der induktiven Erwärmung im Bereich des erzeugten Bauteils liegen und
- mindestens eine der Spulen (6, 7) zur induktiven Erwärmung so angeordnet ist, dass sie zumindest teilweise oberhalb einer Ebene (10) angeordnet ist, in welcher durch die Strahlung das Bauteil im Pulverbett erzeugt wird.

2. Verfahren nach Anspruch 1,
**dadurch gekennzeichnet, dass**
mindestens eine Spule (6, 7) zur induktiven Erwärmung so angeordnet ist, dass sie zumindest teilweise um das erzeugte Bauteil herum angeordnet ist.

3. Verfahren nach Anspruch 1 oder 2,
**dadurch gekennzeichnet, dass**
die Spulen (6, 7) zur induktiven Erwärmung so angeordnet sind, dass sie ineinander und/oder nacheinander entlang der Spulenachse angeordnet sind.

4. Verfahren nach einem der vorhergehenden Ansprüche,
**dadurch gekennzeichnet, dass**
die Strahlung Laserstrahlung oder Elektronenstrahlung ist, welche insbesondere durch eine Spule zur induktiven Erwärmung hindurch auf das Pulverbett gerichtet wird.

## Claims

1. A method for producing components (5) by means of selective irradiation of a powder bed (4), in which the component (5) that is being produced is at the same time heated inductively,
**characterised in that**
- the excitation of induction is provided by way of a plurality of coils (6, 7), in which a plurality of alternating voltages with different frequencies are applied,
- the arrangement of the coils (6, 7) for inductive heating and/or the selection of the frequencies of the alternating voltages are/is effected in such a way that the regions of effect (8, 9) of the inductive heating lie in the region of the component being generated, and
- at least one of the coils (6, 7) for inductive heating is arranged in such a way that it is arranged at least in part above a plane (10) in which the component in the powder bed is generated by the radiation.

2. A method according to claim 1,
**characterised in that**
at least one coil (6, 7) for inductive heating is arranged in such a way that it is arranged at least in part around the component being generated.

3. A method according to claim 1 or 2,
**characterised in that**
the coils (6, 7) for inductive heating are arranged in such a way that they are arranged inside each other and/or one after the other along the coil axis.

4. A method according to one of the preceding claims, **characterised in that** the radiation is laser radiation or electron radiation which in particular is directed onto the powder bed through a coil for inductive heating.

## Revendications

1. Procédé de fabrication de pièces (5) par irradiation sélective d'un lit de poudre (4), où la pièce (5) fabriquée est simultanément chauffée par induction,
**caractérisé en ce que**
- l'excitation inductive est réalisée par plusieurs bobines (6, 7) où plusieurs tensions alternatives sont appliquées à des fréquences différentes,
- l'agencement des bobines (6, 7) pour le chauffage par induction et/ou la sélection des fréquences des tensions alternatives sont effectués de telle manière que les plages d'action (8, 9) du chauffage par induction sont comprises dans la plage de la pièce produite, et
- au moins une des bobines (6, 7) est disposée pour le chauffage par induction de manière à être située au moins en partie au-dessus d'un plan (10) où la pièce est produite par rayonnement dans le lit de poudre.

2. Procédé selon la revendication 1,
**caractérisé en ce que**
au moins une bobine (6, 7) pour le chauffage par induction est disposée de manière à entourer au moins en partie la pièce produite.

3. Procédé selon la revendication 1 ou 2, **caractérisé en ce que**
les bobines (6, 7) pour le chauffage par indiction sont agencées de manière à être disposées l'une dans l'autre et/ou l'une dernière l' autre le long de l'axe de bobine.

4. Procédé selon l'une des revendications précédentes,
**caractérisé en ce que**
le rayonnement est une faisceau laser ou un faisceau d'électrons, lequel est dirigé vers le lit de poudre en traversant notamment une bobine pour le chauffage par induction.
